# EUROPEAN PATENT SPECIFICATION

(11) **EP 3 587 749 B1**
(45) Date of publication and mention of the grant of the patent: **27.01.2021**
(21) Application number: 19178849.6
(22) Date of filing: 06.06.2019
(51) Int. Cl.: F01D 25/16, F01D 25/28, F02C 7/20, B64D 29/06, F02K 3/068

(54) **GAS TURBINE ENGINE**
GASTURBINENTRIEBWERK
MOTEUR DE TURBINE À GAZ

(30) Priority: 28.06.2018 GB 201810606
(43) Date of publication of application: 01.01.2020
(73) Proprietor: Rolls-Royce plc, London N1 9FX (GB)
(72) Inventor: Wilshaw, Johnathan, Derby, Derbyshire DE24 8BJ (GB)
(74) Representative: Rolls-Royce plc

(56) References cited:
- EP-A1- 0 147 878
- EP-A2- 2 495 425
- FR-A1- 2 295 876
- FR-A1- 2 651 537
- GB-A- 2 010 969
- GB-A- 2 490 781

## Description

The present disclosure relates to gas turbine engine.

Gas turbine engines usually have two airflows; a first airflow through an engine core and a second airflow through a bypass duct. The air in the core airflow is compressed through one or more compressors, and mixed with fuel. The mixture is combusted, and expanded through one or more turbines. The turbine(s) drive a shaft which drives the compressor(s) and a fan at the front of the engine. The fan directs air through the core airflow and through the bypass airflow, to generate thrust. The shaft defines an axial direction of the engine, along which the airflows are generally directed. The bypass duct is annular in cross section perpendicular the shaft, and is arranged around the outside of the engine core.

The shaft is mounted to the stationary support structure of the engine through bearings. For example, a front bearing may be provided at an upstream end of the engine core, an exhaust bearing at the downstream end, and an intermediate bearing housing may be provided between the front and exhaust bearings. The engine core has a front bearing housing encasing the front bearing, an exhaust bearing housing engaging the exhaust bearing, an intermediate bearing housing encasing the intermediate bearing, and inter-case portions extending between the bearing housings.

The bypass duct includes a number of outlet guide vanes, downstream of the fan. These provide structural support between an outer housing of the engine and the engine core, and also help control the airflow through the bypass duct. The outlet guide vanes extend between the front bearing housing, and a fan case or guide vane mounting ring forming part of the outer wall of the bypass duct.

The outer wall of the bypass duct may also have a rear fan casing provided downstream of the fan casing or outlet guide vane mounting ring. Typically, A-frame support struts are provided between the rear fan casing and the inter-case around the intermediate compressor or the intermediate bearing housing. Therefore the A-frames and outlet guide vanes form a virtual torque box, to help manage torsional forces in the engine.

French patent application FR 2295876 A1 discloses a mounting arrangement for a gas turbine engine in which the engine outer casing and the core gas generator are mounted independently to the pylon and in which all the outer connections between the outer casing and the pylon and between the core gas generator and the pylon lie in substantially the same two planes.

The present disclosure provides a gas turbine engine as set out in the appended claims.

There is provided a gas turbine engine for an aircraft, the gas turbine engine comprising: a fan located adjacent an air intake of the engine, the fan comprising a plurality of fan blades; downstream of the fan, an engine core comprising a turbine, a compressor, and a core shaft connecting the turbine to the compressor; an engine core housing at least partly encasing the engine core; a fan case surrounding the fan and defining at least a part of a bypass duct radially outside the engine core; a plurality of outlet guide vanes extending between the engine core housing and an outlet guide vane support region of the fan case, adjacent an upstream end of the bypass duct; one or more supports extending from the fan case to the engine core housing; characterised in that: a first end of the one or more supports is fixed to the fan case at the outlet guide vane support region; and a second end of the one or more supports is fixed to the engine core housing adjacent an exhaust of the core engine.

The assembled spoke structure formed by the outlet guide vanes extending between the core engine and the fan case is stiff, providing strength to the engine. Further, providing supports from the outlet guide vane support region of the fan case to the core engine housing provides a virtual torque box. This gives structural rigidity to the engine, without requiring a separate rear fan casing. Thus, the rear fan casing can be omitted. This saves weight, and enables the overall length of the engine in the axial direction to be reduced, reducing drag.

The engine may include one or more bearings for mounting the core shaft to a support structure of the engine. An exhaust bearing may be provided adjacent an exhaust of the engine core. The engine core housing may include an exhaust bearing housing encasing the exhaust bearing. The second end of the one or more supports may be fixed to the exhaust bearing housing.

A front bearing may be provided adjacent the fan. The engine core housing may further include a front bearing housing encasing the front bearing. Radially inner ends of the outlet guide vanes may be coupled to the engine core by torque boxes. The torque boxes may extend between the front bearing housing and a portion of the engine core housing between the front bearing housing and the rear bearing housing. The torque box may extend between the front bearing housing, and a housing encasing a further bearing between the front bearing and exhaust bearing. The torque box may be a structure that manages torsional loading within the engine, for example by resisting deformation due to such torsional loading.

At least one of the one or more supports may comprise an A-frame having first and second struts, The first and second struts may meet at an apex at one of the of the support, and may be spaced from each other at the other end of the support. The apex may be formed at the first end of the support.

The gas turbine engine may have a principal axis of rotation. The engine core and fan case may be formed around the principal axis of rotation and airflow through the engine core and bypass duct may extend substantially along the principal axis. Each of the one or more supports may have an axis of symmetry extending radially from the principal axis of rotation. The gas turbine engine may have a pair of supports. The pair of supports may be arranged in diametrically opposed positions, around the principal axis of rotation.

The gas turbine engine may include a gearbox that receives an input from the core shaft and outputs drive to the fan so as to drive the fan at a lower rotational speed than the core shaft

The turbine may be a first turbine, the compressor may be a first compressor, and the core shaft may be a first core shaft. The engine core may further comprise a second turbine upstream from the first turbine, a second compressor downstream from the first compressor, and a second core shaft connecting the second turbine to the second compressor. The second turbine, second compressor, and second core shaft may be arranged to rotate at a higher rotational speed than the first core shaft.

The second end of the one or more supports may be fixed to the engine core housing at an axial location that is downstream of the combustor and/or downstream of the second turbine.

The one or more supports may form a virtual torque box between the engine core and the fan case.

The supports may be arranged to expand when heated. The expansion of the supports when heated may match or substantially match thermal expansion of the engine core. Heated air or fluid from the engine core may be directed through the supports, to cause the supports to expand. The supports may be formed of a material having a thermal expansion coefficient arranged to match or substantially match thermal expansion of the engine core.

The assembled spoke structure formed by the outlet guide vanes extending between the core engine and the fan case is stiff, providing strength to the engine. Further, providing supports from outlet guide vane mounting ring to the exhaust bearing housing provides a virtual torque box. This gives structural rigidity to the engine, without requiring a separate rear fan casing. Thus, the rear fan casing can be omitted. This saves weight, and enables the overall length of the engine in the axial direction to be reduced, reducing drag.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.
Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4A** is a schematic sectional side view of a gas turbine engine according to an embodiment of the disclosure; and
**Figure 4B** is a schematic front view of the gas turbine engine of Figure 4A.

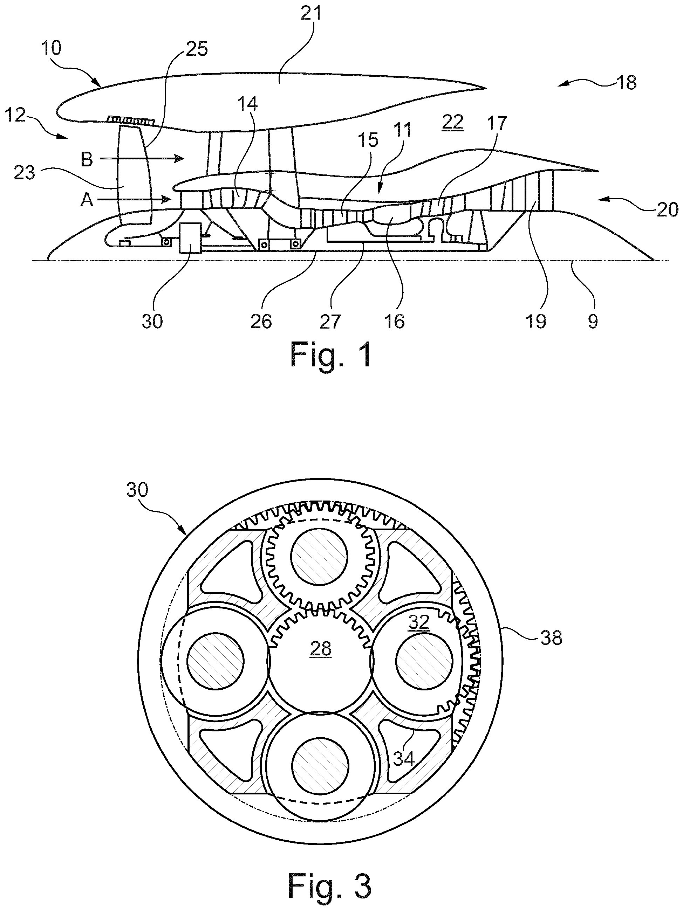

Figure 1 illustrates a gas turbine engine 10 having a principal rotational axis 9. The engine 10 comprises an air intake 12 and a propulsive fan 23 having a plurality of blades 25. The fan 23 generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

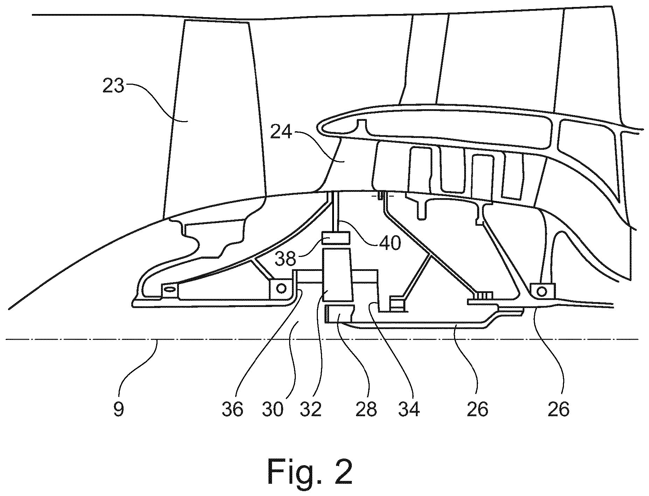

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the engine core nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

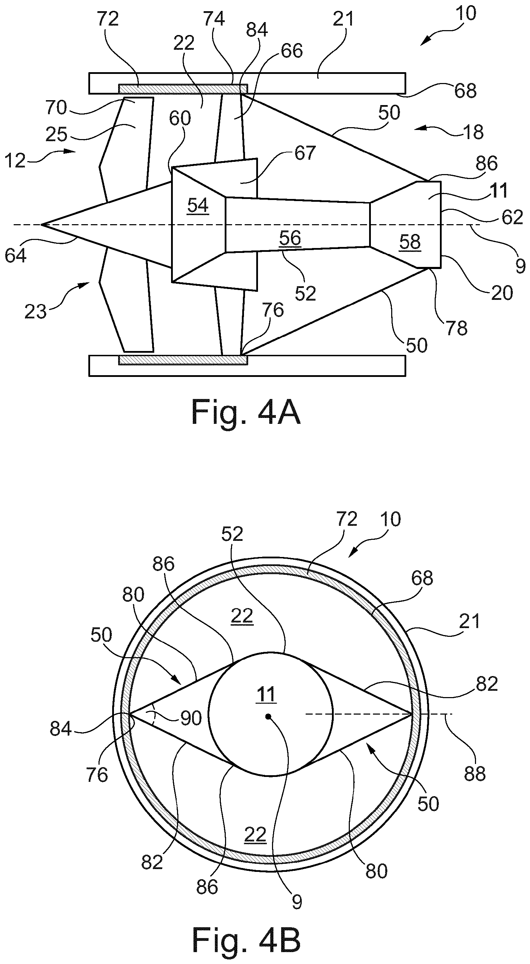

Figures 4A and 4B schematically show certain elements of a gas turbine engine 10 in more detail, in order to demonstrate an example arrangement of supports 50 that can be used to provide structural rigidity to the engine 10.

The shafts 26, 27 of the engine 10 are secured to the stationary supporting structure of the engine 10 by bearings. A first (front) bearing (not shown) is provided at first end 60 of the engine core 11, and a second (exhaust) bearing (not shown) is provided at a second end 62 of the engine core 11, opposite the first end 60 and downstream of the first end 60.

As shown in Figure 4A, the engine core 11 is encased in a housing 52. In the illustrated example, the housing 52 has three or more separate portions 54, 56, 58, although it will be appreciated that the housing 52 may comprise any number of portions. A front bearing housing 54 encases the front bearing, adjacent the first end 60 of the engine core 11, and an exhaust bearing housing 58 encases the exhaust bearing, adjacent the second end 62 of the engine core 11. An inter-case 56 portion of the core engine housing 52 extends between the front bearing housing 54 and exhaust bearing housing 58.

It will be appreciated that further bearings may be provided between the first end 60 and the second end 62 of the engine core 11. Each bearing may have an associated bearing housing region. It will also be appreciated that the bearing housings do not necessarily directly encase the bearings. Further parts of the engine may be provided radially between the bearings and the bearing housing.

The fan 23 is mounted upstream of the engine core 11, and includes a nose cone or spinner fairing 64 to guide air drawn through the fan blades 25. Downstream of the fan 23, the bypass duct 22 is provided with a plurality of outlet guide vanes 66 arranged around the circumference of the bypass duct 22.

The tips of the fan blades 25 are surrounded by a fan case 72. The fan case 72 extends circumferentially around the fan 23, and rearwards in a direction towards the second end 62 of the engine core 11. Each outlet guide vane 66 extends between the engine core 11 and an axially rear portion 74 of the fan case 72, whilst the fan is received within an axially forward portion of the fan case 72.

The outlet guide vanes 66 are in the form of aerofoils having a radial extent extending across the bypass duct 22, and an axial extent extend along the bypass duct 22. Air passing through the bypass duct 22 passes over the surfaces of the outlet guide vanes 66, in gaps between adjacent outlet guide vanes 66. The outlet guide vanes 66 thus help control the flow of air through the bypass duct 22.

A front portion of the radially outer surface of the bypass duct 22 is defined by the fan case 72. Axially rearward of the fan case, the nacelle 21 of the engine 10 includes an inner wall 68, which defines the radially outer surface of the rest of the bypass duct 22. The nacelle may also extend forward, around the fan case 72, in some examples. The radially inner surface of the bypass duct 22 is formed by the engine core housing 52.

The fan case 72, or the portion of the nacelle 21 around the fan case 72, is strengthened compared to the inner wall 68, to contain a released fan blade 25 in the event it detaches from the fan 23. The fan case 72 may also include a liner or other material that protects the inner wall 68 from wear as the fan 23 rotates and the blades 25 expand and contact the wall 68.

Since the outlet guide vanes 66 are mechanically coupled to the engine core 11 torsional loads may be passed along the outlet guide vanes 66. To help manage these loads, radially inner ends of the outlet guide vanes 66 are coupled to the engine core by torque boxes 67. A front end of each toque box 67 is secured to the front bearing housing, whilst a rear end is secured to the inter case 56. In examples with intermediate bearings, the rear end of the torque box may be secured to the intermediate bearing housings.

In addition, to further help accommodate torsional loads, supports 50 are provided in the engine 10. A first end 76 of the support 50 is secured to the rear portion 74 of the fan case 72, in the same region as the outlet guide vanes 66. A second end 78 of the support 50, opposite the first end 76, is secured to the exhaust bearing housing 58. A number of such supports 50 may be provided around the circumference of the bypass duct 22.

Figure 4B shows an end-on view of the engine 10, with the fan blades 25 and outlet guide vanes 66 omitted so that the supports 50 can be better seen.

Each support 50 includes a pair of struts 80, 82. At the first end 76 of the support 50, the ends of the struts 80, 82 meet at an apex 84 which is fixed to the rear portion 74 of the fan case 72. From the apex 84, the struts 80, 82 separate to downstream ends 86 at the second end 78 of the support 80. The downstream ends 86 of the struts 80, 82 are fixed to the exhaust bearing housing 58 at circumferentially spaced positions.

When viewed in the plane perpendicular to the principal axis 9 of the engine 10 (as in Figure 4B), the circumferential position of the apex 84 is central between the circumferential position of the downstream ends 86 of the struts 80, 82. Thus, each support 50 forms an A-frame.

In the example shown in Figure 4B, a first support 50 is provided with the apex 84 of the support 50 in a position at 90 degrees from the vertical, around the principal axis 9 of rotation, such that that the apex 84 of the first support is on one side of the engine 10. A second support 50 is provided with its apex 84 in a diametrically opposed position to the apex 84 of the first support 50 around the principal axis 9. Therefore, the angle measured between the apexes 84, around the principal axis 9, is 180 degrees.

The angle 90 between the struts 80, 82 at the apex 84 is the same for each support 50. Therefore, the downstream end 86 of the first strut 80 (i.e. the strut that extends in a clockwise direction from the apex 84) of the first support 50 is also diametrically opposed to the downstream end 86 of the first strut 82 (i.e. the strut that extends in a clockwise direction from the apex 84) of the second support 50. The second struts 82 (i.e. the struts that extend anticlockwise from the apex 84) of the two supports 50 are similarly diametrically opposed. As such, when viewed in cross-section perpendicular to the principal axis 9, the supports 50 are symmetric about an axis of symmetry 88 extending radially from the principal axis (and through the apex 84).

The supports 50 and outlet guide vanes 66 combine to form a virtual torque box that can provide structural rigidity to the engine 10 around the principal axis, helping to manage the torsional loads in the engine 10, and prevent distortion of the engine from a circular shape.

In the example discussed above, the first end 76 of the support 50 is fixed to the rear portion 74 of the fan case 72. It will be appreciated that this may be by way of example only. Where an engine 10 is provided with an alternative structure to secure the outlet guide vanes 66 to the nacelle 21 or fan case 72, such as a mounting ring, the first end 76 of the supports 50 may be secured to this. Therefore, the first end 76 of the supports 50 may be secured to any support structure of the outlet guide vanes 66. No separate rear fan case is required.

The torque box 67 at the radially inner ends of the outlet guide vanes 66 is given by way of example only. The outlet guide vanes 66 may be mounted to the engine core 11 in any suitable manner.

The supports 50 should be formed of a suitable material to provide the structural rigidity to the engine 10. In some, but not all examples, the supports 50 may be made from a material with high thermal expansion co-efficient, such that thermal expansion of the core engine 11, if any, is matched by the supports. Alternatively, to accommodate any thermal expansion in the core engine 11, the supports may be hollow, or include passages. The supports are then provided with hot air or fluid using heat taken from the compressor stages, or lubricating oil in the gearbox or bearing chambers. This ensures that the supports expand with the engine core 11, if the engine core 11 expands.

The supports 50 shown in Figures 4A and 4B are by way of example only. The angle 90 at the apex 84 may be varied. Furthermore, in some examples, the support 50 need not be symmetric about a radially extending axis of symmetry.

Any suitable support may be used. In the example discussed above, a pair of struts 80, 82 are provided, each extending in axial, radial and circumferential direction. In other examples, the support 50 may contain a single strut 80 extending axially and radially only, or axially, radially and circumferentially as discussed above.

In further examples, the support 50 may include three or more struts 80, 82, extending axially, radially and optionally circumferentially. Where three or more struts are provided, they may meet at a single apex 84, or adjacent struts may meet at different apexes, for example at alternating ends to form a "trellis" type arrangement.

In some examples, braces (not shown) may be provided between struts. The braces may extend circumferentially, and may also extend radially and/or axially as well. The braces are only coupled to the struts 80, 82, and not to the engine core housing 52 or nacelle inner wall 68 or fan case 72.

In the example discussed above, a pair of supports 50 is provided in diametrically opposed positions. It will be appreciated that any number of supports 50 maybe provided, and the supports 50 may be provided at any positions around the circumference of the engine 10, with any possible spacing between adjacent supports 50. Furthermore, although the example discussed above includes two identical supports 50, this need not be the case, and the supports 50 may be different.

The arrangement of the core housing 52 discussed above is also given by way of example only. Any housing arrangement enclosing part or all of the engine core 11 may be provided. The core housing 52 should enclose at least an exhaust region, of the core, where the support 50 is secured.

It will be appreciated that the supports 50 may be used in any gas turbine engine 10, including, geared and non-geared engines of any size.

It will be understood that the invention is not limited to the embodiments above-described and various modifications and improvements can be made without departing from the concepts described herein within the scope of the following claims.

## Claims

1. A gas turbine engine (10) for an aircraft, the gas turbine engine comprising:
a fan (23) located adjacent an air intake (12) of the engine (10), the fan (23) comprising a plurality of fan blades (25);
downstream of the fan (23), an engine core (11) comprising a turbine (19), a compressor (14), and a core shaft (26) connecting the turbine (19) to the compressor (14);
an engine core housing (52) at least partly encasing the engine core (11); a fan case (72) surrounding the fan (23) and defining at least a part of a bypass duct (22) radially outside the engine core (11);
a plurality of outlet guide vanes (66) extending between the engine core housing (52) and an outlet guide vane support region (74) of the fan case (72), adjacent an upstream end of the bypass duct (22);
one or more supports (50) extending from the fan case (72) to the engine core housing (52);
**characterised in that**:
a first end (76) of the one or more supports (50) is fixed to the fan case (72) at the outlet guide vane support region; and
a second end (78) of the one or more supports (50) is fixed to the engine core housing (52) adjacent an exhaust (20) of the engine core (11).

2. The gas turbine engine (10) of claim 1, wherein the engine includes one or more bearings for mounting the core shaft (26) to a support structure (24) of the engine (10).

3. The gas turbine engine (10) of claim 2, including an exhaust bearing provided adjacent an exhaust of the engine core (11), wherein:
the engine core housing (52) includes an exhaust bearing housing (58) encasing the exhaust bearing; and
the second end (78) of the one or more supports (50) is fixed to the exhaust bearing housing (58).

4. The gas turbine engine of claim 3, including a front bearing provided adjacent the fan (23), wherein
the engine core housing (52) includes a front bearing portion (54) encasing the front bearing;
radially inner ends of the outlet guide vanes (66) are coupled to the engine core (11) by torque boxes (67); and
the torque boxes (67) extend between the front bearing housing (54) and a portion of the engine core (11) housing between the front bearing housing (54) and the rear bearing housing (58).

5. The gas turbine engine of claim 4, wherein the torque box (67) extends between the front bearing housing (54), and a housing encasing a further bearing between the front bearing and exhaust bearing.

6. The gas turbine engine (10) of any preceding claim, at least one of the one or more supports (50) comprises an A-frame having first and second struts (80, 82), wherein the first and second struts (80, 82) meet at an apex (84) at one end of the of the support (50), and are spaced from each other at the other end of the support (50), wherein, optionally, the apex (84) is formed at the first end (76) of the support (50).

7. The gas turbine engine (10) of any preceding claim, wherein:
the gas turbine engine (10) has a principal axis of rotation (9); and
the engine core (11) and fan case (72) are formed around the principal axis of rotation (9) and airflow (A, B) through the engine core (11) and bypass duct (22) extends substantially along the principal axis (9).

8. The gas turbine engine (10) of claim 7, wherein each of the one or more supports (50) has an axis of symmetry (88) extending radially from the principal axis of rotation (9).

9. The gas turbine engine of claim 7 or claim 8, having a pair of supports (50), wherein the pair of supports (50) are arranged in diametrically opposed positions, around the principal axis of rotation (9).

10. The gas turbine engine (10) of any preceding claim, including:
a gearbox (30) that receives an input from the core shaft (26) and
outputs drive to the fan (23) so as to drive the fan (23) at a lower rotational speed than the core shaft (26)

11. The gas turbine engine according to any preceding claim, wherein:
the turbine is a first turbine (19), the compressor is a first compressor (14), and the core shaft is a first core shaft (26);
the engine core (11) further comprises a second turbine (17) upstream from the first turbine (19), a second compressor (15) downstream from the first compressor (14), and a second core shaft (27) connecting the second turbine (17) to the second compressor (15); and
the second turbine (17), second compressor (15), and second core shaft (27) are arranged to rotate at a higher rotational speed than the first core shaft (26).

12. The gas turbine engine (10) of any preceding claim, wherein the one or more supports (50) form a virtual torque box between the engine core (11) and the fan case (72).

13. The gas turbine engine (10) of any preceding claim, wherein the supports (50) are arranged to expand when heated, and wherein the expansion of the supports (50) when heated matches or substantially match thermal expansion of the engine core (11).

14. The gas turbine engine (10) of claim 13, wherein:
heated air or fluid from the engine core (11) is directed through the supports (50), to cause the supports (50) to expand; and/or
the supports (50) are formed of a material having a thermal expansion coefficient arranged to match or substantially match thermal expansion of the engine core (11).

## Patentansprüche

1. Gasturbinenmotor (10) für ein Luftfahrzeug, wobei der Gasturbinenmotor folgendes umfasst:
einen Fan (23), der sich angrenzend an einen Lufteinlass (12) des Motors (10) befindet, wobei der Fan (23) eine Mehrzahl von Fan-Schaufeln (25) umfasst;
stromabwärts des Fans (23) ein Kerntriebwerk (11), das eine Turbine (19), einen Kompressor (14) und eine Kernwelle (26), welche die Turbine (19) mit dem Kompressor (14) verbindet;
ein Kerntriebwerksgehäuse (52), welches das Kerntriebwerk (11) wenigstens teilweise einschließt;
ein Fan-Gehäuse (72), das den Fan (23) umgibt und wenigstens einen Teil eines Bypass-Kanals (22) radial außerhalb des Kerntriebwerks (11) definiert;
eine Mehrzahl von Auslassleitschaufeln (66), die sich zwischen dem Kerntriebwerksgehäuse (52) und einem Auslassleitschaufel-Trägerbereich (74) des Fan-Gehäuses (72) angrenzend an ein stromaufwärts liegendes Ende des Bypass-Kanals (22) erstrecken;
einen oder mehrere Träger (50), die sich von dem Fan-Gehäuse (72) des Kerntriebwerksgehäuses (52) erstrecken;
**dadurch gekennzeichnet, dass**:
ein erstes Ende (76) des einen oder mehrerer Träger (50) an dem Auslassleitschaufel-Trägerbereich an dem Fan-Gehäuse (72) angebracht ist; und
ein zweites Ende (78) des einen oder mehrerer Träger (50) angrenzend an einen Auslass (20) des Kerntriebwerks (11) an dem Kerntriebwerksgehäuse (52) angebracht ist.

2. Gasturbinenmotor (10) nach Anspruch 1, wobei der Motor eine oder mehrere Lager zur Befestigung der Kernwelle (26) an einer Trägerstruktur (24) des Motors (10) umfasst.

3. Gasturbinenmotor (10) nach Anspruch 2, der ein Auslasslager umfasst, das angrenzend an einen Auslass des Kerntriebwerks (11) bereitgestellt ist, wobei:
das Kerntriebwerksgehäuse (52) ein Auslasslagergehäuse (58) umfasst, welches das Auslasslager einschließt; und wobei
das zweite Ende (78) des einen oder der mehreren Träger (50) an dem Auslasslagergehäuse (58) angebracht ist.

4. Gasturbinenmotor nach Anspruch 3, der ein vorderes Lager umfasst, das angrenzend an den Fan (23) bereitgestellt ist, wobei:
das Kerntriebwerksgehäuse (52) einen vorderen Lagerteil (54) umfasst, der das vordere Lager einschließt;
radial innere Enden der Auslassleitschaufeln (66) über Drehmomentkästen (67) mit dem Kerntriebwerk (11) gekoppelt sind; und wobei
sich die Drehmomentkästen (67) zwischen dem vorderen Lagergehäuse (54) und einem Teil des Gehäuses des Kerntriebwerks (11) zwischen dem vorderen Lagergehäuse (54) und dem hinteren Lagergehäuse (58) erstrecken.

5. Gasturbine nach Anspruch 4, wobei sich der Drehmomentkasten (67) zwischen dem vorderen Lagergehäuse (54) und einem Gehäuse erstreckt, das ein weiteres Lager zwischen dem vorderen Lager und dem Auslasslager einschließt.

6. Gasturbinenmotor (10) nach einem der vorstehenden Ansprüche, wobei mindestens ein Träger des einen oder der mehreren Träger (50) einen A-Rahmen mit ersten und zweiten Streben (80, 82) umfasst, wobei die erste und die zweite Strebe (80, 82) an einem Scheitelpunkt (84) an einem Ende des Trägers (50) zusammentreffen, wobei der Scheitelpunkt (84) optional an dem ersten Ende (76) des Trägers (50) ausgebildet ist.

7. Gasturbinenmotor (10) nach einem der vorstehenden Ansprüche, wobei:
der Gasturbinenmotor (10) eine Hauptrotationsachse (9) aufweist; und wobei
das Kerntriebwerk (11) und das Fan-Gehäuse (72) um die Hauptrotationsachse (9) ausgebildet sind, und wobei sich ein Luftstrom (A, B) durch das Kerntriebwerk (11) und den Bypass-Kanal (22) im Wesentlichen entlang der Hauptachse (9) erstreckt.

8. Gasturbinenmotor (10) nach Anspruch 7, wobei jeder Träger des einen oder der mehreren Träger (50) eine Symmetrieachse (88) aufweist, die sich radial von der Hauptrotationsachse (9) erstreckt.

9. Gasturbinenmotor nach Anspruch 7 oder Anspruch 8, mit einem Paar von Trägern (50), wobei das Paar von Trägern (50) an diametral entgegengesetzten Positionen um die Hauptrotationsachse (9) angeordnet ist.

10. Gasturbinenmotor (10) nach einem der vorstehenden Ansprüche, umfassend:
ein Getriebe (30), das eine Eingabe von der Kernwelle (26) empfängt und Antrieb an den Fan (23) ausgibt, um den Fan (23) mit einer geringeren Drehzahl als die Kernwelle (26) anzutreiben.

11. Gasturbinenmotor nach einem der vorstehenden Ansprüche, wobei:
die Turbine eine erste Turbine (19) ist, wobei der Kompressor ein erster Kompressor (14) ist, und wobei die Kernwelle eine erste Kernwelle (26) ist;
das Kerntriebwerk (11) ferner eine zweite Turbine (17) stromaufwärts von der ersten Turbine (19) erstreckt, einen zweiten Kompressor (15) stromabwärts von dem ersten Kompressor (14), und eine zweite Kernwelle (27), welche die zweite Turbine (17) mit dem zweiten Kompressor (15) verbindet; und wobei
die zweite Turbine (17), der zweite Kompressor (15) und die zweite Kernwelle (27) so angeordnet sind, dass sie sich mit einer höheren Drehzahl drehen als die erste Kernwelle (26).

12. Gasturbinenmotor (10) nach einem der vorstehenden Ansprüche, wobei der eine oder die mehreren Träger (50) einen virtuellen Drehmomentkasten zwischen dem Kerntriebwerk (11) und dem Fan-Gehäuse (72) bilden.

13. Gasturbinenmotor (10) nach einem der vorstehenden Ansprüche, wobei die Träger (50) so angeordnet sind, dass sie sich bei Erhitzung ausdehnen, und wobei die Ausdehnung der Träger (50) bei Erhitzung der Wärmeausdehnung des Kerntriebwerks (11) entspricht oder im Wesentlichen entspricht.

14. Gasturbinenmotor (10) nach Anspruch 13, wobei:
erhitzte Luft oder erhitztes Fluid von dem Kerntriebwerk (11) durch die Träger (50) geleitet wird, um eine Ausdehnung der Träger (50) zu bewirken; und/oder wobei
die Träger (50) aus einem Material mit einem Wärmeausdehnungskoeffizienten bestehen, der so angeordnet ist, dass er der Wärmeausdehnung des Kerntriebwerks (11) entspricht oder im Wesentlichen entspricht.

## Revendications

1. Moteur de turbine à gaz (10) pour un aéronef, le moteur de turbine à gaz comprenant :
un ventilateur (23) situé à côté d'une entrée d'air (12) du moteur (10), le ventilateur (23) comprenant une pluralité d'aubes de ventilateur (25) ;
en aval du ventilateur (23), un noyau central (11) comprenant une turbine (19), un compresseur (14), et un arbre de noyau (26) reliant la turbine (19) au compresseur (14) ;
un logement de noyau central (52) enfermant au moins partiellement le noyau central (11) ;
un carter de ventilateur (72) entourant le ventilateur (23) et définissant au moins une partie d'un conduit de dérivation (22) radialement à l'extérieur du noyau central (11) ;
une pluralité d'aubes directrices de sortie (66) s'étendant entre le logement de noyau central (52) et une zone de support d'aube directrice de sortie (74) du carter de ventilateur (72), adjacente à une extrémité amont du conduit de dérivation (22) ;
au moins un support (50) s'étendant du carter de ventilateur (72) au logement de noyau central (52) ;
**caractérisé en ce que** :
une première extrémité (76) de l'au moins un support (50) est fixée au carter de ventilateur (72) au niveau de la région de support d'aube directrice de sortie ; et
une seconde extrémité (78) de l'au moins un support (50) est fixée au logement de noyau central (52) à côté d'un échappement (20) du noyau central (11).

2. Moteur de turbine à gaz (10) selon la revendication 1, le moteur comprenant au moins un roulement pour monter l'arbre de noyau (26) sur une structure de support (24) du moteur (10).

3. Moteur de turbine à gaz (10) selon la revendication 2, comprenant un roulement d'échappement disposé à côté d'un échappement du noyau central (11) :
le logement de noyau central (52) comprenant un logement de roulement d'échappement (58) enfermant le roulement d'échappement ; et
la seconde extrémité (78) de l'au moins un support (50) étant fixée au logement de roulement d'échappement (58).

4. Moteur de turbine à gaz selon la revendication 3, comprenant un roulement avant disposé à côté du ventilateur (23),
le logement de noyau central (52) comprenant une partie de roulement avant (54) qui enferme le roulement avant ;
des extrémités radialement internes des aubes directrices de sortie (66) étant accouplées au noyau central (11) par des caissons de torsion (67) ; et
les caissons de torsion (67) s'étendant entre le logement de roulement avant (54) et une partie du logement de noyau central (11) entre le logement de roulement avant (54) et le logement de roulement arrière (58).

5. Moteur de turbine à gaz selon la revendication 4, le caisson de torsion (67) s'étendant entre le logement de roulement avant (54), et un logement renfermant un autre roulement entre le roulement avant et le roulement d'échappement.

6. Moteur de turbine à gaz (10) selon l'une quelconque des revendications précédentes, au moins un de l'au moins un support (50) comprenant un cadre en A ayant des première et seconde entretoises (80, 82), les première et seconde entretoises (80, 82) se rencontrant à un sommet (84) au niveau d'une extrémité du support (50), et étant espacées l'une de l'autre au niveau de l'autre extrémité du support (50), éventuellement, le sommet (84) étant formé au niveau de la première extrémité (76) du support (50).

7. Moteur de turbine à gaz (10) selon l'une quelconque des revendications précédentes :
le moteur de turbine à gaz (10) ayant un axe de rotation principal (9) ; et
le noyau central (11) et le carter de ventilateur (72) étant formés autour de l'axe principal de rotation (9) et le flux d'air (A, B) à travers le noyau central (11) et le conduit de dérivation (22) s'étendant sensiblement le long de l'axe principal (9).

8. Moteur de turbine à gaz (10) selon la revendication 7, chacun de l'au moins un support (50) ayant un axe de symétrie (88) s'étendant radialement à partir de l'axe principal de rotation (9).

9. Moteur de turbine à gaz selon la revendication 7 ou 8, ayant une paire de supports (50), la paire de supports (50) étant disposés dans des positions diamétralement opposées, autour de l'axe principal de rotation (9).

10. Moteur de turbine à gaz (10) selon l'une quelconque des revendications précédentes, comprenant :
une boîte de vitesses (30) qui reçoit une entrée de l'arbre de noyau (26) et qui transmet l'entraînement au ventilateur (23) de sorte à entraîner le ventilateur (23) à une vitesse de rotation inférieure à celle de l'arbre de noyau (26).

11. Moteur de turbine à gaz selon l'une quelconque des revendications précédentes :
la turbine étant une première turbine (19), le compresseur étant un premier compresseur (14), et l'arbre de noyau étant un premier arbre de noyau (26) ;
le noyau central (11) comprenant en outre une seconde turbine (17) en amont de la première turbine (19), un second compresseur (15) en aval du premier compresseur (14), et un second arbre de noyau (27) reliant la seconde turbine (17) au second compresseur (15) ; et
la seconde turbine (17), le second compresseur (15) et le second arbre de noyau (27) étant disposés de sorte à tourner à une vitesse supérieure à celle du premier arbre de noyau (26).

12. Moteur de turbine à gaz (10) selon l'une quelconque des revendications précédentes, l'au moins un support (50) formant un caisson de torsion virtuel entre le noyau central (11) et le carter de ventilateur (72).

13. Moteur de turbine à gaz (10) selon l'une quelconque des revendications précédentes, les supports (50) étant disposés de sorte à se dilater lorsqu'ils sont chauffés, et la dilatation des supports (50) lorsqu'ils sont chauffés correspondant ou correspondant sensiblement à la dilatation thermique du noyau central (11).

14. Moteur de turbine à gaz (10) selon la revendication 13 :
l'air ou le fluide chauffé provenant du noyau central (11) étant dirigé à travers les supports (50), pour provoquer la dilatation des supports (50) ; et/ou
les supports (50) étant formés d'un matériau ayant un coefficient de dilatation thermique disposé pour correspondre ou correspondre sensiblement à la dilatation thermique du noyau central (11).
